# FASCICULE DE BREVET EUROPEEN

(11) **EP 4 077 812 B1**
(45) Date de publication et mention de la délivrance du brevet: **25.06.2025**
(21) Numéro de dépôt: 20824239.6
(22) Date de dépôt: 15.12.2020
(51) Int. Cl.: E01C 7/26, C08L 95/00

(54) **PRODUIT DE STABILISATION COMPORTANT DES FIBRES DE CELLULOSE ET DU BITUME POUR LA RÉALISATION D'ENROBÉS BITUMINEUX STABILISÉS ET ENROBÉ BITUMINEUX STABILISÉ**
STABILISIERUNGSPRODUKT, DAS CELLULOSEFASERN UND BITUMEN UMFASST, ZUM HERSTELLEN VON STABILISIERTEN BITUMINÖSEN BESCHICHTUNGEN UND STABILISIERTE BITUMINÖSE BESCHICHTUNG
STABILIZATION PRODUCT COMPRISING CELLULOSE FIBERS AND BITUMEN FOR CREATING STABILIZED BITUMINOUS COATINGS AND STABILIZED BITUMINOUS COATING

(30) Priorité: 17.12.2019 FR 1914672
(43) Date de publication de la demande: 26.10.2022
(73) Titulaire: Onduline, 92150 Suresnes (FR)
(72) Inventeur: SAKIOGLU, Murtaza Etem, 34776 ISTANBUL (TR); ROHART, Christophe, 76230 BOIS-GUILLAUME (FR); GÖKÇEK, Mehmet Baris, 54600 SAKARYA (TR)
(74) Mandataire: Jacobacci Coralis Harle
(86) Numéro de dépôt international: PCT/EP2020/086197
(87) Numéro de publication internationale: WO 2021/122581

(56) Documents cités:
- JP-A- 2019 210 384
- US-A1- 2010 055 485
- A R WOODSIDE ET AL: "STONE MASTIC ASPHALT: ASSESSING THE EFFECT OF CELLULOSE FIBRE ADDITIVES.", PROCEEDINGS OF THE INSTITUTION OF CIVIL ENGINEERS - MUNICIPAL ENGINEER, vol. 127, no. 3, 1 September 1998 (1998-09-01), pages 103 - 108, XP055564450, ISSN: 0965-0903, DOI: 10.1680/imuen.1998.30985

## Description

Produit de stabilisation comportant des fibres de cellulose et du bitume pour la réalisation d'enrobés bitumineux stabilisés et enrobé bitumineux stabilisé.

### DOMAINE TECHNIQUE

La présente invention concerne de manière générale le domaine de la construction et la réparation de chaussées. Elle concerne plus particulièrement un produit de stabilisation comportant des fibres de cellulose et du bitume pour la réalisation d'enrobés bitumineux stabilisés ainsi qu'un enrobé bitumineux stabilisé.

### ARRIERE-PLAN TECHNOLOGIQUE

Il a été proposé d'incorporer des fibres pour améliorer le comportement des couches de matériaux bitumineux constituant les chaussées, notamment les routes, lors de leur réalisation ou lors de réparations. Les fibres permettent de stabiliser la couche de matériaux bitumineux.

Par exemple le document WO88/08438 divulgue des matériaux bitumineux comportant des fibres et EP 2 860 225 divulgue une composition bitume, de fibres, de particules de caoutchouc, de cire et d'un activateur.

Une difficulté de cette incorporation de fibres dans des matériaux bitumineux est due à la dissimilarité des propriétés, notamment physicochimiques, entre les fibres et les éléments à base de bitume. De plus, il est important d'éviter des hétérogénéités dans les couches des chaussées qui sont autant de points de faiblesse de ces dernières. Il est donc important d'obtenir un mélange homogène entre les fibres et les matériaux bitumineux avant leur utilisation. Cela nécessite un temps de préparation et de mélange difficilement compatible avec un mélange sur place au moment où l'on réalise ou répare la chaussée. En outre, si un mélange entre les fibres et les matériaux bitumineux est effectué bien avant l'utilisation, alors il y a un risque de ségrégation entre les différents constituants du mélange avant l'utilisation. Enfin, dans certains cas, les conditions de préparation, de stockage et d'utilisation des matériaux bitumineux, notamment une température élevée, peuvent être néfastes aux fibres à plus ou moins long terme.

Il est donc souhaitable de pouvoir disposer d'un moyen facilitant l'incorporation de fibres de cellulose dans des matériaux bitumineux, en particulier des enrobés bitumineux, pour réaliser rapidement et facilement des compositions homogènes. Pour cela il est proposé un produit comportant des fibres de cellulose et du bitume dans des proportions particulières qui peut facilement et rapidement être mélangé à des matériaux bitumineux, notamment enrobés bitumineux, pour obtenir ces compositions homogènes.

Dans le domaine de l'utilisation des fibres de cellulose et du bitume on connait en outre :
- l'article de A R WOODSIDE ET AL: "STONE MASTIC ASPHALT: ASSESSING THE EFFECT OF CELLULOSE FIBRE ADDITIVES.", dans la revue PROCEEDINGS OF THE INSTITUTION OF CIVIL ENGINEERS - MUNICIPAL ENGINEER, vol. 127, no. 3, 1 septembre 1998 (1998-09-01), pages 103-108, XP055564450, ISSN: 0965-0903, DOI: 10.1680/imuen.1998.30985,
- la demande de brevet US 2010/055485 A1 et
- la demande de brevet JP 2019 210384 A.

L'article A R WOODSIDE enseigne l'utilisation d'une grande proportion de fibres de cellulose, le bitume représentant quasiment tout le reste: le total cellulose + bitume représentant 99%. Les produits additionnels sont donc à un taux très bas de 1%. L'objet de la présente invention se distingue de cet article par des fibres en proportion bien moindre et la présence d'un fort taux de compléments entre 6% et 14%.

Le document US 2010/055485 A1, concerne une plaque de fibres de cellulose sur laquelle du bitume est pulvérisé. Les fibres de cellulose se retrouvent à un dosage très élevé de 55,5 à 62% en poids. Il s'agit donc d'un objet différent du produit de stabilisation de la présente invention et ce document incite, tout comme l'article précédent, à utiliser un dosage élevé en fibres de cellulose. En outre, concernant le pH, il est enseigné dans ce document que la composition liquide ayant un pH d'environ 6,8 favorise l'adhésion de l'asphalte aux fibres de cellulose (« a slurry having a pH of approximately 6.8 has been found to promote better adhesion of the asphalt particles to the cellulose fibers »). Cette composition liquide contient de l'eau en grande quantité et est sans rapport avec un produit de stabilisation qui est sensiblement solide et dont l'hygrométrie est très faible à nulle. Les différences physicochimiques ne permettent pas de déduire une valeur de pH pour un produit solide à hygrométrie très faible ou nulle.

Le produit de stabilisation proposé par la présente invention est un mélange quasi homogène de cellulose et bitume. Le produit de stabilisation proposé permet une dissolution rapide et dynamique lors de son intégration au sein de l'enrobé bitumineux. La forme du produit de stabilisation, avantageusement granulaire, fait que les grains sont indépendants les uns des autres et qu'ils peuvent être plus facilement séparés et ils s'intègrent de manière plus libre et plus rapide dans l'enrobé bitumineux aboutissant à un mélange plus homogène et meilleure dispersion. Il en résulte une meilleure qualité de l'enrobé bitumineux stabilisé finalement obtenu car on rappelle que les enrobés comportent des granulats qui sont des matériaux durs, ayant des arêtes généralement aigues, et un mélange/malaxage prolongé avec les fibres de cellulose du produit de stabilisation peut entraîner des cassures/coupures des fibres. Il est donc important que l'homogénéité soit obtenue le plus rapidement possible.

Parmi les nombreux autres avantages d'un tel produit, il devient ainsi possible de pouvoir choisir sur le terrain/en temps réel la composition qui va être utilisé aux proportions souhaitées directement dans le mélange, avec fibres ou sans fibre, le mélange étant rapide même si on choisit des proportions différentes de fibres, ce qui évite d'avoir à transporter plusieurs compositions préparées d'avance (avec fibres et sans fibre). De plus, on peut choisir la concentration en fibres dans le mélange final contrairement au cas où le mélange a été préparé d'avance.

### EXPOSE DE L'INVENTION

Afin de remédier aux inconvénients de l'état de la technique, on propose un produit de stabilisation résultant du mélange de fibres de cellulose et de bitume dans lequel le bitume est à un dosage élevé par rapport aux fibres de cellulose. Ainsi, il est donc proposé un produit de stabilisation selon la revendication 1. D'autres caractéristiques non limitatives et avantageuses du produit de stabilisation de l'invention, prises individuellement ou selon toutes les combinaisons techniquement possibles, sont les suivantes :
- les compléments sont essentiellement des charges minérales,
- les charges minérales sont notamment des silicates, notamment kaolin, et/ou du carbonate de calcium,
- les compléments comportent des liants ou des résines,
- les compléments comportent des colorants ou des encres,
- les compléments proviennent des papiers et cartons de recyclage utilisés et correspondent à l'apport de la partie hors fibre de cellulose desdits papiers et cartons,
- les fibres de cellulose sont d'origine naturelle,
- les fibres de cellulose d'origine naturelle proviennent du bambou, de l'abaca (bananier textile), du chanvre, du lin, de déchets de bois,
- les fibres de cellulose sont vierges,
- les fibres de cellulose sont des fibres de recyclage,
- les fibres de cellulose sont recyclées de papiers et/ou de cartons,
- les fibres de cellulose obtenues par recyclage de papiers et de cartons sont traitées, classées et combinées dans des compositions prédéfinies et nettoyées,
- le bitume est du bitume brut,
- le bitume est du bitume modifié,
- le bitume est modifié par des polymères, notamment par des polymères SBS ou APP ou tout autre agent fluxant,
- le produit de stabilisation comporte 45% +/- 5% de fibres de cellulose, 45% +/-5% de bitume, 10% +/-4% de teneur en compléments pour un total de 100% des trois, le pourcentage étant en poids, et le produit de stabilisation a un pH à 7,5 +/-1,
- le produit de stabilisation a un taux d'humidité inférieur ou égal à 7%,
- le produit de stabilisation a un taux d'humidité compris entre 0,5% et 5 %,
- le produit de stabilisation comporte 50% +/- 5% de fibres de cellulose, 40% +/-5% de bitume, 10% +/-4% de teneur en compléments pour un total de 100% des trois, le pourcentage étant en poids, et le produit de stabilisation a un pH à 7,
- le produit de stabilisation est conformé selon l'une des conformations suivantes :
   * granulaire, les granules ayant une taille de 10 mesh,
   * particulaire, les particules ayant une taille de 14 mesh,
- le produit de stabilisation comporte en outre des polymères additionnels d'amélioration de comportement thermique des enrobés bitumineux stabilisés réalisés,
- les polymères additionnels sont du type MGR,
- les polymères additionnels sont notamment le styrène butadiène styrène (SBS) ou le polypropylène atactique (PPA),
- la longueur des fibres de cellulose est comprise entre 200µm et 1450µm.

On mentionne un enrobé bitumineux stabilisé non revendiqué qui comporte un produit de stabilisation selon l'invention, l'enrobé bitumineux résultant du mélange de granulats, de fines, de bitume, et du produit de stabilisation.

D'autres caractéristiques non limitatives et avantageuses de l'enrobé bitumineux stabilisé de l'invention, prises individuellement ou selon toutes les combinaisons techniquement possibles, sont les suivantes :
- l'enrobé bitumineux stabilisé comporte entre 0,1% et 5% en poids du produit de stabilisation,
- l'enrobé bitumineux stabilisé comporte 0,3% +/- 0,1 % en poids du produit de stabilisation,
- les granulats sont des graviers de section comprise entre 2mm et 22mm, la classe étant sélectionnée en fonction des propriétés finales à obtenir,
- les fines sont constituées de sables et poussières de section inférieure à 63 micromètres.
- le produit de stabilisation est incorporé dans un enrobé bitumineux non encore stabilisé et préalablement fabriqué,
- l'incorporation se fait directement dans un mixeur de granulats, typiquement à une température comprise entre 150°C et 180°C.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

La cellulose utilisée provient du recyclage de papier et cartons. Dans certains cas, on peut choisir spécifiquement d'utiliser des cartons ou, alors, certains papiers, dont on connait certaines caractéristiques et notamment s'ils proviennent ou pas d'un ou de plusieurs précédents recyclages, ce qui a généralement un effet sur la longueur moyenne des fibres de cellulose.

Pour la préparation des fibres de cellulose, on procède au triturage en milieu liquide du papier et/ou du carton, au filtrage de la pâte obtenue puis au lavage des fibres de cellulose. Ainsi, les fibres de cellulose sont nettoyées au cours de ce processus et ce nettoyage consiste essentiellement à supprimer les éléments solides étrangers tels que plastiques, agrafes, autres éléments métalliques, billes de polystyrène...

Une certaine quantité des charges présentes initialement dans le papier et le carton peuvent suivre les fibres de cellulose et se retrouver dans le produit de stabilisation. Ces charges font partie de ce que l'on nomme dans la présente demande les « compléments ». Ce sont des charges minérales qui représentent la plus grande partie de ces compléments. En général, la charge minérale la plus importante en quantité est du carbonate ou du kaolin qui avait été ajouté lors de la fabrication du papier ou du carton. D'autres minéraux peuvent être présents mais en bien moindre quantité et ils correspondent aux minéraux naturels des sources de fibre de cellulose et qui ont été conservés au cours de la fabrication du papier ou du carton. Les compléments peuvent en plus comporter des liants ou des résines ainsi que des colorants ou des encres et, plus généralement, tout produit autre que les fibres de cellulose, présent dans le carton ou papier de recyclage utilisé.

Les fibres de cellulose obtenues sont mélangées à du bitume pour obtenir le produit de stabilisation et dans les proportions préférées suivantes indiquées en poids : environ de 45% à 50% de fibres de cellulose et de 45% à 40% de bitume, pour une teneur en compléments d'environ 10%, pour un total de 100% des trois. De préférence, le produit de stabilisation obtenu a un pH compris approximativement entre 7,5 et 7. Son taux d'humidité est de préférence compris entre 0,5% et 5%.

Pour la fabrication des granulés bituminés résultant du mélange de la cellulose au bitume, on réalise tout d'abord des granulés en fibre de cellulose puis on les trempe dans du bitume liquide, à chaud, puis on les ressort du bitume liquide et on les sèches en les refroidissant ou les laissant refroidir, tout en les vibrant pour séparer les granulés de cellulose bituminée les unes des autres. Ce séchage et séparation s'effectue typiquement sur une grille qui permet en outre de faire passer un flux d'air à travers les granules.

Dans une autre modalité de fabrication, on disperse les fibres de cellulose dans du bitume liquide, à chaud, on récupère la dispersion et on peut attendre sa solidification par refroidissement puis on la broie pour former des granules ou particules. Dans une variante, on passe la dispersion dans une extrudeuse à couteau de coupe en sortie.

Dans une autre modalité de fabrication, on réalise un matelas de fibre de cellulose qui est séché et découpé en plaques de 1 mm à 10 mm d'épaisseur, on imprègne les plaques dans du bitume liquide, à chaud, puis après séchage par refroidissement, on broie les plaques imprégnées de bitume pour former des granules ou particules.

A noter que dans certains cas, un broyage peut être remplacé par des découpes ou cisaillages ou massicotage par des outils coupants adaptés. En outre, dans le cas où le broyage, coupage, ne permet pas d'obtenir des granulés ou particules calibrées, on peut faire passer les éléments broyés, découpés, à travers des cribles pour obtenir des granules ou particules calibrées.

Pour la préparation de l'enrobé bitumineux, on procède par l'ajout progressif du produit de stabilisation à l'aide d'un tapis d'alimentation alimentant un mixeur de granulats. On peut charger le tapis soit en déversant manuellement des petits sacs du produit de stabilisation ou à l'aide d'un vibreur se situant sous un « big-bag » du produit de stabilisation La vitesse du tapis doit être compatible avec le pourcentage souhaité de produit à ajouter dans le mélange.

La préparation du produit final incorporant le produit de stabilisation peut être effectué d'avance et stocké avant utilisation sur une route ou chaussée. On peut donc par exemple mélanger des granules de cellulose bituminée à de l'asphalte ou enrobés et le mélange est stocké. On peut donc par exemple mélanger des granules de cellulose bituminée à du bitume et le mélange est stocké pour préparation ultérieure d'asphalte ou enrobés.

Le produit de stabilisation comportant des fibres de cellulose et du bitume destiné à la réalisation d'enrobés bitumineux stabilisés, peut être fabriqué sous plusieurs formes et, par exemple :
- sous forme de granulés dont la taille est définie à environ 10 mesh,
- sous forme de particules dont la taille est définie à environ 14 mesh ou 16 mesh selon les cas.

Pour obtenir ces formes on utilise un système spécial de broyage et des tamis vibrants équipées de moyen de réfrigération et de filtration.

On peut montrer les avantages apportés par le produit de stabilisation avec un test de Schellenberg qui consiste à utiliser des gobelets en verre dans lesquels on place les matières à comparer. Le gobelet dans lequel on a placé un mélange d'enrobés et du produit de stabilisation montre un moindre dépôt restant de bitume sur les parois par rapport à un gobelet comportant des enrobés seuls. Le produit de stabilisation évite donc le drainage du bitume à partir des granulats.

Dans certaines modalités de mise en œuvre, le produit de stabilisation comportant des fibres de cellulose et du bitume destiné à la réalisation d'enrobés bitumineux stabilisés, peut comporter des additifs et notamment des polymères choisis parmi des agents thermoplastiques, modifiants du bitume.

## Revendications

1. Produit de stabilisation pour la réalisation d'enrobés bitumineux, ledit produit de stabilisation comportant des fibres de cellulose et du bitume, les fibres de cellulose ayant été dispersées dans le bitume et recouvertes de bitume afin de former un mélange homogène,
**caractérisé en ce que** les fibres de cellulose sont obtenues par recyclage de papiers et de cartons et **en ce que** le produit de stabilisation comporte entre 40% et 55% de fibres de cellulose, entre 35% et 50% de bitume, entre 6% et 14% de teneur en compléments pour un total de 100% des trois, le pourcentage étant en poids, et le produit de stabilisation a un pH compris entre 8,5 et 6,5, et
**en ce que** le produit de stabilisation est conformé selon l'une des conformations suivantes :
* granulaire, les granules ayant une taille comprise entre 35 mesh et 10 mesh,
* particulaire, les particules ayant une taille comprise entre 35 mesh et 14 mesh.

2. Produit de stabilisation selon la revendication 1, **caractérisé en ce que** les fibres de cellulose obtenues par recyclage de papiers et de cartons sont traitées, classées et combinées dans des compositions prédéfinies et nettoyées.

3. Produit de stabilisation selon la revendication 1 ou la revendication 2, **caractérisé en ce qu'**il comporte 45% +/- 5% de fibres de cellulose, 45% +/-5% de bitume, 10% +/-4% de teneur en compléments pour un total de 100% des trois, le pourcentage étant en poids, et le produit de stabilisation a un pH à 7,5 +/-1.

4. Produit de stabilisation selon la revendication 1 ou la revendication 2, **caractérisé en ce qu'**il comporte 50% +/- 5% de fibres de cellulose, 40% +/-5% de bitume, 10% +/-4% de teneur en compléments pour un total de 100% des trois, le pourcentage étant en poids, et le produit de stabilisation a un pH à 7.

5. Produit de stabilisation selon l'une quelconque des revendications précédentes, **caractérisé en ce qu'**il est conformé selon l'une des conformations suivantes :
- granulaire, les granules ayant une taille de 10 mesh,
- particulaire, les particules ayant une taille de 14 mesh.

6. Produit de stabilisation selon l'une quelconque des revendications précédentes, **caractérisé en ce qu'**il comporte en outre des polymères additionnels d'amélioration de comportement thermique des enrobés bitumineux stabilisés réalisés.

7. Produit de stabilisation selon l'une quelconque des revendications précédentes, **caractérisé en ce que** la longueur des fibres de cellulose est comprise entre 200µm et 1450µm.

8. Procédé de réalisation d'un enrobé bitumineux stabilisé, **caractérisé en ce qu'**on mélange des granulats, des fines, du bitume et le produit de stabilisation de l'une quelconque des revendications 1 à 7 et afin que l'enrobé bitumineux stabilisé comporte entre 0,1% et 5% en poids du produit de stabilisation.

## Patentansprüche

1. Stabilisierungsprodukt zum Herstellen von bituminösen Beschichtungen, wobei das Stabilisierungsprodukt Zellulosefasern und Bitumen aufweist, wobei die Zellulosefasern im Bitumen verteilt worden sind und mit Bitumen bedeckt worden sind, um eine homogene Mischung zu bilden,
**dadurch gekennzeichnet, daß** die Zellulosefasern durch Wiederaufbereitung von Papier und Karton erhalten worden ist und daß das Stabilisierungsprodukt zwischen 40 % und 55 % Zellulosefasern, zwischen 35 % und 50 % Bitumen, zwischen 6 % und 14 % an Zusätzen für eine Gesamtheit von 100 % für die drei aufweist, wobei die Prozente Gewichtsprozente sind und das Stabilisierungsprodukt einen pH-Wert zwischen 8,5 und 6,5 hat, und
daß das Stabilisierungsprodukt gemäß einer der folgenden Beschaffenheiten beschaffen ist:
* körnig, wobei die Körner eine Größe zwischen 35 Mesh und 10 Mesh haben,
* teilchenartig, wobei die Teilchen eine Größe zwischen 35 Mesh und 14 Mesh haben.

2. Stabilisierungsprodukt gemäß Anspruch 1, **dadurch gekennzeichnet, daß** die durch Wiederaufbereitung von Papier und Karton erhaltenen Zellulosefasern behandelt, klassifiziert und in vorbestimmten und bereinigten Zusammenstellungen zusammengestellt sind.

3. Stabilisierungsprodukt gemäß Anspruch 1 oder Anspruch 2, **dadurch gekennzeichnet, daß** es 45 % ± 5 % Zellulosefasern, 45 % ± 5 % Bitumen, 10 % ± 4 % an Zusätzen für eine Gesamtheit von 100 % für die drei aufweist, wobei die Prozente Gewichtsprozente sind und das Stabilisierungsprodukt einen pH-Wert von 7,5 ± 1 hat.

4. Stabilisierungsprodukt gemäß Anspruch 1 oder Anspruch 2, **dadurch gekennzeichnet, daß** es 50 % ± 5 % Zellulosefasern, 40 % ± 5 % Bitumen, 10 % ± 4 % an Zusätzen für eine Gesamtheit von 100 % für die drei aufweist, wobei die Prozente Gewichtsprozente sind und das Stabilisierungsprodukt einen pH-Wert von 7 hat.

5. Stabilisierungsprodukt gemäß einem der vorangehenden Ansprüche, **dadurch gekennzeichnet, daß** es gemäß einer der folgenden Beschaffenheiten beschaffen ist:
* körnig, wobei die Körner eine Größe von 10 Mesh haben,
* teilchenartig, wobei die Teilchen eine Größe von 14 Mesh haben.

6. Stabilisierungsprodukt gemäß einem der vorangehenden Ansprüche, **dadurch gekennzeichnet, daß** es außerdem Zusatzpolymere zur Verbesserung des Wärmeverhaltens des erzeugten stabilisierten bituminösen Mischguts aufweist.

7. Stabilisierungsprodukt gemäß einem der vorangehenden Ansprüche, **dadurch gekennzeichnet, daß** die Länge der Zellulosefasern zwischen 200 µm und 1450 µm beträgt.

8. Verfahren zur Herstellung eines stabilisierten bituminösen Mischguts, **dadurch gekennzeichnet, daß** man Granulat, Feinstoff, Bitumen und das Stabilisierungsprodukt gemäß einem der Ansprüche 1 bis 7 mischt, damit das stabilisierte bituminöse Mischgut zwischen 0,1 Gew.-% und 5 Gew.-% Stabilisierungsprodukt aufweist.

## Claims

1. Stabilization product for creating stabilized bituminous coatings, said stabilization product comprising cellulose fibers and bitumen, said cellulose fibers having been dispersed in the bitumen and covered with bitumen in order to form a homogeneous mixture,
**characterized in that** the cellulose fibers have been obtained by recycling paper and paperboard and **in that** the stabilization product comprises between 40 % and 55 % of cellulose fibers, between 35 % and 50 % of bitumen, and between 6 % and 14 % of supplements for a total of 100 % for all three, the percentage being percentage of weight, the stabilization product having a pH between 8.5 and6.5, and
**in that** the stabilization product is in accordance with one of the following conformations:
* granular, the grains having a dimension between 35 mesh and 10 mesh,
* particulate, the particulates having a dimension between 35 mesh and 14 mesh.

2. Stabilization product according to claim 1, **characterized in that** the cellulose fibers obtained by recycling paper and paperboard are treated, classified, and combined in predefined and cleaned compositions.

3. Stabilization product according to claim 1 or to claim 2, **characterized in that** it comprises 45 % ± 5 % of cellulose fibers, 45 % ± 5 % of bitumen, 10 % ± 4 % of additives for a total of 100 % for all three ones, the percentage being weight percent, and the stabilization product having a pH of 7,5 ± 1.

4. Stabilization product according to claim 1 or to claim 2, **characterized in that** it comprises 50 % ± 5 % of cellulose fibers, 40 % ± 5 % of bitumen, 10 % ± 4 % of additives for a total of 100 % for all three ones, the percentage being weight percent, and the stabilization product having a pH of 7.

5. Stabilization product according to one of the preceding claims, **characterized in that** it is in accordance with one of the following conformations:
- granular, the grains having a dimension of 10 mesh,
- particulate, the particulates having a dimension of 14 mesh.

6. Stabilization product according to one of the preceding claims, **characterized in that** it further comprises additional polymers for improving the thermal behavior of the produced stabilized bituminous coatings.

7. Stabilization product according to one of the preceding claims, **characterized in that** the length of the cellulose fibers is between 200 µm and 1450 µm.

8. Method of producing a stabilized asphalt, **characterized in that** granulates, fines, bitumen, and the stabilization product according to any one of claims 1 through 7 are mixed, and so that the stabilized asphalt comprises between 0.1 % and 5 % of weight of the stabilization product.
